# EUROPEAN PATENT APPLICATION

(11) **EP 4 459 739 A1**
(43) Date of publication of application: **06.11.2024**
(21) Application number: 23171643.2
(22) Date of filing: 04.05.2023
(51) Int. Cl.: H01M 10/48

(54) **METHOD FOR SIMULATING REAL-LIFE BEHAVIOR OF BATTERY CELLS IN A BATTERY PACK AND A BATTERY TEST DEVICE**

(71) Applicant: Battery Sphere GmbH, 86845 Großaitingen (DE)
(72) Inventor: LUTZ, Lukas, Dr., 86845 Großaitingen (DE); SCHERRER, Luca, 86845 Großaitingen (DE); ALVES DALLA CORTE, Daniel, Dr., 86845 Großaitingen (DE)
(74) Representative: Ziebig Hengelhaupt Intellectual Property Attorneys Patentanwaltskanzlei PartGmbB

(57) **Abstract**

The present invention concerns a method for simulating real-life behavior of battery cells in a battery pack, comprising the following steps: a) Placing a plurality of battery cells on top of each other to form a stack; b) Exerting a predetermined setpoint pressure onto the stack; c) Controlling or regulating the setpoint pressure which can be exerted on the stack depending on at least one input variable, wherein the at least one input variable being the current thickness, voltage, pressure or temperature of the at least one of the plurality of battery cells. Further, the invention concerns a battery test device for simulating real-life behavior of battery cells in a battery pack.

## Description

### FIELD OF THE INVENTION

The present invention concerns a method for simulating real-life behavior of battery cells in a battery pack and a battery test device, according to the independent claims.

### BACKGROUND OF THE INVENTION

The intensive testing of battery cells, the smallest unit of a battery, is of utmost importance for a successful and safe electrification of various sectors e.g. in automotives, power tools or grid storage.

A battery pack is classically built out of several, individual battery cells, packed along each other and electrically connected in parallel or series. Hence, it is crucial to understand how each battery cell is behaving by itself but also in connection/close contact with other battery cells. Furthermore, battery cells are often embedded in battery packs comprising specific components such as e.g., thermal sleeves, compression pads, fire protective fabrics or other battery cell sorting materials which should improve e.g. performance, thermal management or improve safety of the battery pack.

Hence, to understand the full behavior of battery cells under various conditions, e.g., the cell by itself, in combination with neighboring battery cells or under application of additional battery cell surrounding components, is the challenge imposed on the industry, which has to be resolved by high quality battery testing.

However, no commercial test-apparatuses, that can mimic all the above-mentioned conditions, exist until now. An additional challenge for the operator or battery tester is the handling of battery cells in the specific test environments. Here especially the electrical connection between each battery cell and the so-called battery cycler (responsible for delivering the charging and discharging current to the battery cell). Such battery tests are mostly carried out in temperature-controlled climate chambers, in which the handling of, often fragile battery connectors (so-called battery tabs) and its connection to heavy and rigid electrical cables is a challenging task for the user.

Since battery cells are usually tested under precise temperature conditions, each battery cell must be placed in a so-called temperature chamber (oven or furnace) or conditioning device. Through holes in the chamber's body, thick, highly conductive cables are introduced. These rigid cables are then to be connected with the poles of the individual battery cells. Often these battery cells have very fragile or hard to reach positive and negative poles (contacts). The connecting process of the battery cells via clamps or screws to the rigid cables, inside the tight climate chambers, is often a cause for errors or even failures. Any defect in this connection will generate an electrical resistance to the electrical current that will be used during the battery testing protocol, ultimately being converted in heat (Ohms law) that can cause the fire and explosion of the battery cell. This handling problem needs to be simplified to optimize the workflow of battery test engineers and facilitate a few-less battery testing procedure.

Ultimately such tests are not only cumbersome, but also highly costly and inefficient. Therefore an imminent urge to invent new ways of testing under such conditions whilst also optimizing the work-flows has evolved in battery-related industries.

The behavior of battery cells is a rather complex phenomenon. Four of the most critical parameters though, are the batteries performance, lifetime, its thermal behavior and its swelling (volumetric or volume expansion). Another challenge when testing such parameters is that the behavior of an individual battery cell and a stack of several battery cells, touching each other, is different. The direct proximity has an impact on the thermal properties (cooling and heating), the swelling and hence the battery cells individual performances.

So the arising challenge for battery cell characterization is that both, the individual as well as the combined battery cell stack (with multiple cells) behaviors need to be tested to understand relevant impacts on later battery module (up to dozen of individual cells) or pack (up to thousands of individual cells) design.

With newly emerging so-called next-generation battery materials, such as e.g. metallic anodes, silicon anodes or all-solid-state-batteries, the urge for an applied force (stacking pressure) on the cell became imminent. This force improves the contact of the internal materials and hence is essential for optimal performance.

However, the downside of such material is that they often show a drastic volumetric expansion upon cycling. Through the inter-/deintercalation process of Li-lons upon cycling of a battery cell, the volume at the electrodes can expand and contract drastically. This volumetric change (particularly in pouch format and prismatic battery cells) has a subsequent effect on the pressure of the internal components of the battery cell, as well as a tremendous effect on the pressure of the entire battery module/pack. Especially local pressure changes can easily lead to damage that can be detrimental for a battery cell.

In commercial applications, battery cells are often combined into battery modules and packs, where many battery cells are packed in close contact with each other and electrically connected in parallel and/or series configuration and a certain predefined stacking pressure is applied on the module/pack. Hence it is important to understand the effect of pressure changes on the performance of cells as well as the effect of the volumetric expansion of single cells and the propagated effect in multi-battery cell stacks.

Therefore modern cell-fixtures require the possibility to apply various stack pressures on single and multiple cells, as well as an automated pressure balancing system to ensure equal pressure changes as a result of volumetric expansion. At the same time, such tests must allow for the tracking of the individual expansion of each cell, since they can be significantly different.

To optimize the performance and especially thermal behavior of cells in application relevant conditions, special materials were developed that usually either surround or embed a battery cell in various ways to improve the cells behavior in various ways (performance, safety, heat dissipation). Such materials can for example be: compression foam, heat shields, sealing materials, insulating sleeves. To ultimately select the right technology for a specific battery cell application, one needs to test the combination of the battery cell and the specialty material - a challenging task for every test engineer. The battery test device needs to be designed in such a way that it can host the combination of the cell and the specialty material - for both the single cell and multi cell configuration.

In addition to the electrical performance of a battery cell, its thermal behavior is essential for later applications. Here the battery cell's individual thermal profile during various charge/discharge scenarios is of great importance. There are generally two options to measure the temperature, either with individual temperature probes or a temperature probe mash, while the other technique of choice are thermal-cameras that monitor the actual surface heat distribution.

To measure the thermal profile however under application relevant conditions, certain stack pressures need to be applied on the battery cell, which is usually done with pressure plates that are connected via screws. This makes it difficult to access and monitor the actual surface temperature of a battery cell with a thermal camera.

Engineers need a system that allows them to simultaneously monitor the surface temperature of a battery cell, while applying a certain amount of stacking pressure.

The challenge with new battery cell chemistry is their aggressive behavior and the resulting safety risks. This has two implications, one is on the process of testing and here especially the electrical connection to a test-equipment, which is a very delicate process and often implies a safety risk for the operator. The second challenge in the testing process, is the necessity to access new parameters such as the volumetric expansion, heat dissipation and the pressure build up within the individual cell. Additionally, one has to apply a certain stack pressure on the battery cells, to simulate real life conditions in a battery pack, where many battery cells are stacked together and exert pressure due to swelling on the encasing of the battery pack. These factors make it extremely expensive and difficult to test new battery cell chemistry with high throughput, which slows down the time to market of such technology.

The present invention concerns the above said battery cells and packs.

### DESCRIPTION OF THE INVENTION

It is therefore the object of the present invention to provide a method for simulating real-life behavior of battery cells in a battery pack and a battery test device that are improved as compared to the devices or methods known from the state of the art. In detail, the method for simulating real-life behavior of battery cells in a battery pack and a battery test device shall provide a high throughput testing of new battery cell chemistry for pouch cell and prismatic cell formats in order to speed up the industrial battery development. Also, the handling and connecting multiple battery cells into temperature controlled chambers, the testing of battery cells in direct contact to neighboring battery cells and its encasing (battery pack), especially under constant stacking pressures while monitoring the volumetric expansion and the thermal behavior in combination with additional battery cell enclosing components shall be enhanced.

The object is solved by a method for simulating real-life behavior of battery cells in a battery pack and a battery test device according to the independent claims. The dependent claims describe particularly useful embodiments of the invention.

According to the invention, a method for simulating real-life behavior of battery cells in a battery pack, comprises the following steps:
a) Placing a plurality of battery cells on top of each other to form a stack;
b) Exerting a predetermined setpoint pressure onto the stack;
c) Controlling or regulating the setpoint pressure which can be exerted on the stack depending on at least one input variable, wherein the at least one input variable being the current thickness, voltage, pressure or temperature of the at least one of the plurality of battery cells. Thereby, step c) may comprise the monitoring of the setpoint pressure.

According to an embodiment, the setpoint pressure is controlled or regulated in dependency of at least two input variables, namely a first input variable being the current pressure of at least one of the plurality of battery cells and a second input variable being the current thickness, voltage or temperature of the at least one of the plurality of battery cells.

Thus, according to the invention, a setpoint pressure may be varied in dependence of at least one, advantageously at least two or at least three of the said input variables, especially at the same time. That means, that the pressure applied on the stack can be set accordingly in response to the (first, second and so forth) input variables. In this way, a more precise applying of pressure on the stack of battery cells during tests and automatically providing of a constant pressure value during the tests is possible, even if the battery cells are changing their thickness due to swelling along the test protocol.

Thereby, during the test of the stack of battery cells, mechanical pressure is applied by the battery test device in order to guarantee the good connection between the internal electrodes (poles) and a constant electrolyte/material pathway for the ions. However, it can be challenging to apply (and hold) pressure with precision and at the same time being able to move the entire pressurized setup inside a temperature chamber. It is also important to keep in mind that new battery cell technologies, e.g. solid state batteries require higher values of pressure to be applied. On top of that, there is also the fact that when scaling up a certain technology, the battery cells will get bigger in size due to swelling and the total amount of force needed to be applied to bigger surface areas will increase drastically in order to keep similar levels of pressure. This can make the pressure application in battery cells even more complex to be managed.

In this regard, the present invention offers the solution of applying as well as controlling or regulating the desired pressure for the tests of the battery cells. The inventive battery test device is also capable of holding important levels of pressure (force) during long-term experiments. In principle, the pressure application can be done manually (based on a mechanical or hydraulic system) or automatically (based on a gear-equipped motor system). The pressure measurement may be done single or using a combination of precise pressure or force sensors.

Most of the battery cells experience some level of thickness variation (swelling) during the tests, having a direct impact on the value of pressure applied to the cell, as if the dimensions of the cells change along the tests the pressure will change for a pressurizing system based on a fixed distance of the pressurizing plates. This thickness variation can happen with different intensities in each of the cells being tested in the battery test device according to the present invention (in the case of a setup for multiple battery cells) increasing even more the complexity of managing a stable pressure for the entire battery cell staking.

The method may be carried out that way as to keep the pressure applied to the stack of battery cells constant, regardless whether the volumetric thickness in the individual battery cells of the stack varies due to swelling.

According to an embodiment, the first input variable is compared to a predetermined setpoint pressure, wherein in the case of a difference between the predetermined setpoint pressure and the first input variable, the predetermined setpoint pressure is adjusted depending on the difference. The same may be true for a second, a third input variable and so forth. That means, that multiple control or regulating loops may be provided, each loop running in parallel with the other loops such that at the same time, the predetermined setpoint pressure may be varied in dependency of the first, second and so forth input variables superimposed over each other and at the same time. Also, the loops may be cascaded within each other.

Thus, the invention is equipped with an automatic pressure application being capable of counter-balancing the thickness variation of the battery cells in case of swelling and e.g. keeping the pressure constant. This is achieved via a feed-back loop between the data coming from pressure sensors and the motorized pressure application controller.

According to an example, the battery test device comprises a battery test cycler for applying an electric current to the poles of the battery cells or is connectable to such one, the battery test cycler being electrically connected or connectable to the third contacts.

To test the stack of battery cells under real-life environment, the poles of the battery cells are electrically connected to a battery test cycler which applies a current to each battery cell while the predetermined setpoint pressure is exerted onto the stack or simulated battery pack.

Thereby, the battery cells are preferably individually tempered while the predetermined setpoint pressure is exerted onto the stack. This can be done with the battery test device according to the present invention. It may comprise a conditioning device, wherein the conditioning device comprises a heating, like an oven or a cooling device. Thus, real-life environment for the tested stack of battery cells may be simulated with the invention.

In case the input variable exceeds a predetermined threshold for the input variable, the exertion of pressure may be stopped. This is done in order to protect the battery cells to be tested from damage.

Thereby, the setpoint pressure may be a setpoint pressure profile which varies in time. Such, the simulation of a battery cell or pack according to an expected life span or a life period testing is possible with the present invention.

With the inventive method, every test measurement or test cycle may be done at least three times under similar conditions in order to statistically certify the data collected. In this case, it is key to be able to test the performance of battery cells under the mechanical pressure at batches of three battery cells or more per test. The modular test also allows for measuring the performance of a combination of multiple battery cells generating data relevant to the design of the battery module/pack.

The invention also concerns a battery test device for simulating real-life behavior of battery cells in a battery pack, comprising a housing, a plurality of battery cells, the battery cells being arrangeable in the housing on top of each other to form a stack, a pressing device for exerting a predetermined setpoint pressure onto the stack, a control device for controlling or regulating the setpoint pressure which can be exerted on the stack via the pressing device, at least one sensor connected or connectable to the control device, wherein the at least one sensor being arranged to detect a parameter of at least one of the plurality of battery cells as an input variable, wherein the at least one sensor being capable of detecting the current thickness, voltage, pressure or temperature of the at least one of the plurality of battery cells, and the control device being set up in such a way that it controls or regulates the setpoint pressure exerted by the pressing device depending on the at least one input variable.

With the battery test device, the pressure applied to the stack of battery cells can be tested depending on a change of the thickness, voltage, pressure or temperature of the individual battery cell or combinations thereof and can be controlled or regulated in dependency to the change. As an example, also combined sensors, like a temperature and a pressure sensor may be used.

According to an embodiment, the housing may comprise a receptacle for accommodating the plurality of battery cells, the receptacle may comprise a base plate and the at least one sensor being a pressure sensor arranged on or in the receptacle.

Thereby, the receptacle may be designed as a cassette or drawer and can be moved out of the housing of the battery test device or can be completely removed therefrom. With this embodiment, a high-quality connection between the battery cells and electrical cables can be ensured as well as a decrease in the probability of electrical resistance at contacts and consequent heat generation. Also, the handling of battery cells to be tested can be done in a safe environment. All the electrical contacts to connect the battery cells may be protected to avoid accidental short-circuits. Further, the receptacle offers an extra level in terms of safety for transporting the battery cells, as all the cells inside the drawer or cassette have their electrical contact tightly fixed, avoiding the battery cells to move and cause short circuits in case of an accident like dropping the drawer.

The receptacle may comprise first electrical contacts for contacting the poles of each individual battery cell, the housing comprising second electrical contacts which can be brought into connection with the first electrical contacts of the receptacle of the battery test device or are in such a connection.

Thereby, the receptacle may be adapted to receive prismatic, pouch or cylindrical battery cells and preferably has a holder which fits the receptacle, the holder being changeably and detachable fixable in the receptacle.

Once inserted back into the battery test device, the receptacle automatically connects to all the electrical connections hosted at the interior configuration of the device, therefore establishing a direct electrical connection between the battery cells and the cycler without further need for action from the operator since the second electrical contacts can be brought automatically into connection with the first electrical contacts of the housing of the battery test device when introducing the receptacle back into the housing by pushing it by hand.

Advantageously, the second electrical contacts can be brought into connection with third electrical contacts of the housing of the battery test device or are in such a connection.

Generally, the first, second and third electrical contacts may be contacts that conduct current and may be arranged such that they exhibit a positive and a negative pole each.

The battery test device or the receptacle according to the present invention may be designed to be loaded in multiple configurations, from single cell, or set of three cells, up to multiple sets of three cells. The device can be envisaged having a single or multiple cell testing compartments, where in every compartment at least one battery cell is placed for testing.

According to an embodiment, an intermediate plate may be arranged each between directly adjacent battery cells of the stack. Thereby, each intermediate plate has or is assigned the at least one sensor, the at least one sensor being a pressure or temperature sensor, wherein preferably a plurality of such sensors is foreseen (map or grid of sensor). The intermediate plates may be interchangeable with each other. The intermediate plates are also a key mechanical support between the battery cells and can be explored to test mechanical different strategies for buffering the swelling of battery cells. Also combined sensors, like a temperature and a pressure sensor may be used as a grid of sensors. Thus, a temperature and pressure distribution over the surface of the battery cell, e.g. a large pouch battery cell can be captured by means of the combined sensors.

Battery swelling is a key factor when it comes to application of especially Li-Ion batteries. In order to understand battery swelling the volume expansion/contraction of each individual battery cell needs to be monitored during the testing cycles of charge and discharge. However, with the present invention electro-chemical performance tests with physical tests, such as swelling of the battery cells may be combined.

Advantageously, the battery test device may comprise a thickness measuring sensor as the at least one sensor in order to measure the thickness of each individual battery cell on the stack, wherein preferably the thickness measuring sensor being preferably carried out as a distance measuring sensor to measure the distance between the respective intermediate plate and the base plate or between two intermediate plates of the stack of battery cells, wherein preferably the distance measuring sensor being designed as a mechanical, magnetic, magneto-inductive, eddy current, capacitive, optical or sound sensor.

Thus, the pressure applied on the battery cells may be transmitted via the intermediate plates, where every battery cell is compressed between two intermediate plates. The position of every intermediate plate (with reference to the pressing device) can vary with the pressure applied in the stack of battery cells and with the swelling of each battery cell. Therefore, tracking the position of each individual intermediate plate allows to monitor the swelling of each battery cell. The position of each intermediate plate can be tracked with the distance measuring sensors.

The possibility of testing multiple battery cells together in one single device allows for exploring thermal and mechanical properties of the combined samples that are key for application of battery cells into module/pack end use.

In the present invention, the battery test device, e.g. the pressing device may also be equipped with pressure pads, e.g. in the form of metallic or polymer plates that will be used to transmit the mechanical pressure from the pressing device to the individual battery cells. The pressure pads may be in direct contact with the top and bottom battery cells and also act as a heat exchanger. Therefore, pressure pads made from different materials or having different shapes can be envisaged in order to explore cooling strategies and to characterize materials designed to this purpose. Thus also thermal properties of the battery cells having heat exchangers or insulators may be tested with the present invention. The pressure pads may be added to the intermediate plates, also to simulate certain "cushion" behavior, e.g. when adding a foam like material.

According to an embodiment, the pressing device is completely surrounded by the housing. Especially, when the receptacle is also part of the housing or can be inserted into the housing, a compact battery test device can be provided.

Thereby, the battery test device may comprise a conditioning device for adjusting the temperature in the housing, wherein the conditioning device comprises a heating, like an oven or a cooling device. Then, the battery cells may be individually tempered while the predetermined setpoint pressure is exerted onto the stack. Also, the battery test device itself could be added or positioned in any regular temperature or climate chamber and is thus widely usable in standard automotive battery test environments.

The control device of the battery test device may be set up such that it carries out the inventive method.

Furthermore, another application example related to the formation process is disclosed. A formation process can be defined as the activation of a battery cell enabling its electrical functionality. The formation process can be critical for the final performance of a battery cell. According to an embodiment of the invention, the disclosed method for simulating real-life behavior of battery cells in a battery pack is characterized in that the method is applied during a formation process for forming a solid electrolyte interface (SEI) of a battery cell in a battery pack. During such a formation process, complex charging and discharging protocols under controlled setpoint pressure conditions are performed. The simultaneous combination of the formation step and the application of defined and controlled setpoint pressure conditions can provide an advantage of higher battery cell performance and lower production cost and higher production efficiency. Furthermore, the formation protocol can be fine-tuned to a specific cell type in consideration of the applied setpoint pressure.

In another example, the setpoint pressure is adapted and/or changed during the formation process. For example, certain variables can be monitored during the formation process and, depending on the results, a setpoint pressure is adjusted accordingly. For this purpose, the control device is adjusted to process measured data from the formation process and to determine an optimized setpoint pressure value. This can provide an advantage to provide a possibility to adopt specific setpoint pressures in combination with related formation process properties for a specific battery cell.

### BRIEF DESCRIPTION OF THE DRAWINGS

The advantages of the invention will now be illustrated in more detail with reference to a preferred embodiment and the figures, showing:
- Fig. 1: a schematic, side view on a battery test device according to an embodiment of the present invention;
- Fig. 2: a schematic, side view on a stack of batteries according to another embodiment of the present invention;
- Fig. 3: a spatial view on a receptacle of the battery test device according to another embodiment of the present invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

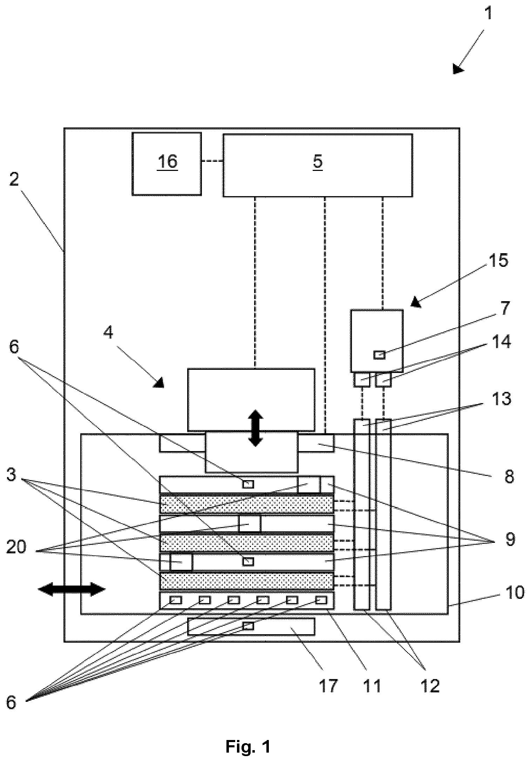

Fig. 1 discloses a schematic, side view on a battery test device 1 according to an embodiment of the present invention.

Thereby, the battery test device 1 is designed for simulating real-life behavior of battery cells 3 in a battery pack. That means, with the battery test device 1 e.g., the swelling inside the case of the battery pack can be simulated as it will occur during normal working conditions of the battery pack, having a multiplicity of stacked battery cells 3.

The battery test device 1 comprises a housing 2 and a plurality of battery cells 3 being arranged inside the housing 2 on top of each other to form a stack. This stack simulates the battery pack. Here, the battery cells 3 are prismatic or pouch type battery cells 3.

Further, a pressing device 4 is provided completely inside the housing 2 for exerting a predetermined setpoint pressure onto the stack of battery cells 3. A control device 5 is designed for controlling or regulating the setpoint pressure which can be exerted on the stack via the pressing device 4.

At least one sensor is connected or connectable to the control device 5 via not shown communication channels, wherein the at least one sensor being arranged to detect a parameter of at least one of the plurality of battery cells 3 as an input variable. Thereby,
the at least one sensor is capable of detecting the current thickness, voltage, pressure or temperature of the at least one of the plurality of battery cells 3 and the the control device 5 being set up in such a way that it controls or regulates the setpoint pressure exerted by the pressing device 4 depending on the at least one input variable.

Further, a plurality of intermediate plates 9 is provided, which are arranged alternately with the battery cells 3 to form the stack. That means that each intermediate plate 9 is arranged between directly adjacent battery cells 3 of the stack each. In other words, two intermediate plates 9 always sandwich one battery cell 3 each. Thereby, each intermediate plate 9 has or is assigned the at least one sensor, the at least one sensor being a pressure or temperature sensor 6.

The housing 2 comprises a receptacle 10 for accommodating the plurality of battery cells 3 (the stack). Therefore, the receptacle 10 comprises a base plate 11 and the at least one sensor being a temperature and/or pressure sensor 6 arranged on or in the receptacle 10, e.g., in the base plate 11. As can best be seen, the lower base plate 11 comprises a plurality of such temperature and/or pressure sensors 6 in order to provide a grid of sensors 6 which are capable of providing a distribution or a map of the sensed input variable across the area of the base plate 11, here the temperature or pressure exerted on the battery cell 3. Also, one or all of the other intermediate plates 9 could comprise of such a sensor grid.

The receptacle 10 is designed as a cassette or drawer and can be moved out of the housing 2 of the battery test device 1 or can be completely removed therefrom. In other words, it may be detachable from the housing 2. The moving direction can be perpendicular to a pressing direction the pressing device 4 exerts the predetermined setpoint pressure on the stack. In the shown case, the pressing direction is vertical, whereas the moving direction is horizontal, see the respective double arrows.

As seen in pressing direction, under the receptacle 10, a base 17 is arranged inside the housing 2, the base 17 comprising at least one further sensor, here a temperature or pressure sensor 6, in order to measure the pressure exerted by the pressing device 4 onto the stack. After having inserted the receptacle 10 into the housing 2, the receptacle 10 or the stack is lowered, such that the base plate 11 comes into contact with the base 17 of the housing. Thus, pressing force is applied from the pressing device 4, onto the stack, through the base plate 11, the receptacle 10 and the base 17 onto the housing 2.

The battery test device 1 may comprise a thickness measuring sensor 8 as the at least one sensor in order to measure the thickness of each individual battery cell 3 of the stack due to swelling. Thereby, the thickness measuring sensor 8 may be preferably carried out as a distance measuring sensor to measure the distance between the respective (or each two) intermediate plates 9 and the base plate 11 or between two intermediate plates 9 of the stack of battery cells 3. Preferably, the distance measuring sensor may be designed as a mechanical, magnetic, magneto-inductive, eddy current, capacitive, optical or sound sensor. Thereby, the distance between the sensor 8 and the intermediate plates 9 may be measured by spotting the sensor 8 on a protrusion 20 of the intermediate plates 9 each.

The receptacle 10 comprises first electrical contacts 12 for contacting the poles (here indicated in dotted lines) of each individual battery cell 3 and the housing 2 comprises second electrical contacts 13 which can be brought into connection with the first electrical contacts 12 of the receptacle 10 or are in such a connection. In order to load the housing 2 with the battery cells 3 to test, first the receptacle 10 is withdrawn out of the housing 2. Then, a first battery cell 3 is laid down on the base plate 11, followed by a first intermediate plate 9, then a second battery cell 3 is laid on top of the first intermediate plate 9 and so on until all battery cells 3 to be tested are accommodated inside the receptacle 10. Then, the poles of the battery cells are contacted with the first electrical contacts 12 each. After the receptacle 10 has been finally loaded to form the stack of battery cells 3, it is slid inside the housing 2 back again. For sliding the receptacle 10 in and out of the housing 2, e.g., a corresponding roller support (not shown) may be provided. There, the first electrical contacts 12 of the receptacle 10 are brought automatically in contact with the second electrical contacts 13 of the housing 2 through sliding it in moving direction back into the housing 2. That means, that the first electrical contacts 12 and the second electrical contacts 13 are designed to be connectable and detachable from each other without a tool.

The battery test device 1 comprises a battery test cycler 15 for applying an electric current to the poles of the battery cells 3 or is connectable to such one. The battery test cycler 15 can also be arranged as shown inside the housing 2 or even be separate to this in another embodiment.

Thereby, the second electrical contacts 13 can be brought into connection with third electrical contacts 14 of the housing 2 of the battery test device 1 or are in such a connection. Thus, the battery test cycler 15 can be electrically connected or connectable with the third contacts 14 to the second electrical contacts 13 and thus to each battery cell 3 in order to electrically test it with the cycler 15.

Further, the battery test device 1 may comprise a conditioning device 16 for adjusting the temperature in the housing 2, wherein the conditioning device 16 may comprise a heating, like an oven or a cooling device. Thereby, the conditioning device 16 may be controlled by the control device 5 in order to set the desired temperature inside the housing 2 during testing the battery cells 3.

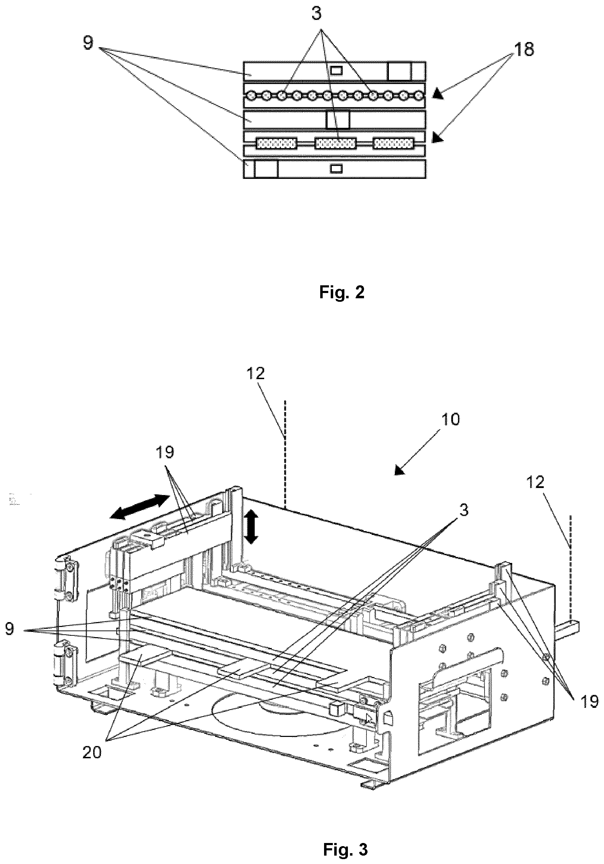

Fig. 2 discloses a schematic, side view on a stack of batteries according to another embodiment of the present invention. Thereby, the receptacle 10 is adapted to receive a plurality of prismatic, pouch or cylindrical battery cells 3 being smaller than the intermediate plates 9, each. Also that means, even in the same stack of the receptacle, battery cells 3 with different exterior shapes can be tested in one and the same stack. Therefore, the receptacle 10 has a holder 18 which fits the receptacle 10, the holder 18 being changeably and detachable fixable in the receptacle 10. As disclosed, the holder 18 may be made up of two parts, one upper and one lower having a negative form to accommodate the plurality of battery cells 3 there between. Again, the holders 18 may be stacked between two intermediate plates 9 to form the stack and thus simulate the battery pack.

Fig. 3 shows a spatial view on a receptacle 10 of the battery test device 1 according to another embodiment of the present invention. As shown, the receptacle 10 is filled with three pouch or prismatic battery cells 3. Even more battery cells 3 could be foreseen in the stack. As can be seen, the receptacle 10 is in a prismatic form and is completely removed out of the housing 2. Thereby, the poles of the battery cells 3 to be tested are connected by adjustable rods (buzz bars) 19 to the first electrodes 12 (see the dashed lines). For every battery cell, at least two rods 19 are foreseen, connecting these electrically through the first, second and third electrical contacts 12 to 14 with the cycler 15 (see fig. 1). Thereby, the rods 19 can be slid against each other in at least two axes in the pressing direction and a direction perpendicular to the pressing direction (see the double arrows in fig. 3) to allow each positive and negative pole of each battery cell 3 to contact. Such, the rods 19 can be adjusted in height and width and depending on the size of the battery cell 3 to be tested and thus can be quickly converted to the size of the battery cell 3 to be tested inside the receptacle 10.

Regardless of the shown embodiment, the control device 5 may be set up such that it carries out the inventive method for simulating real-life behavior of battery cells 3 in a battery pack by exerting a predetermined setpoint pressure onto the stack and controlling or regulating the setpoint pressure which can be exerted on the stack depending on at least one input variable, wherein the at least one input variable being the current thickness, voltage, pressure or temperature of the at least one of the plurality of battery cells 3.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### Reference signs

- 1: battery test device
- 2: housing
- 3: battery cells
- 4: pressing device
- 5: control device
- 6: pressure or temperature sensor
- 7: voltage sensor
- 8: thickness measuring sensor
- 9: intermediate plate
- 10: receptacle
- 11: base plate
- 12: first electrical contact
- 13: second electrical contact
- 14: third electrical contact
- 15: cycler
- 16: conditioning device
- 17: base
- 18: holder
- 19: rod
- 20: protrusion

## Claims

1. Method for simulating real-life behavior of battery cells (3) in a battery pack, comprising the following steps:
a) placing a plurality of battery cells (3) on top of each other to form a stack;
c) exerting a predetermined setpoint pressure onto the stack;
d) controlling or regulating the setpoint pressure which can be exerted on the stack depending on at least one input variable, wherein the at least one input variable being the current thickness, voltage, pressure or temperature of the at least one of the plurality of battery cells (3).

2. Method according to claim 1, **characterized in that** the setpoint pressure is controlled or regulated in dependency of at least two input variables, namely a first input variable being the current pressure of at least one of the plurality of battery cells (3) and a second input variable being the current thickness, voltage, pressure or temperature of the at least one of the plurality of battery cells (3).

3. Method according to claim 1 or 2, **characterized in that** the first input variable is compared to a predetermined setpoint pressure, wherein in the case of a difference between the predetermined setpoint pressure and the first input variable, the predetermined setpoint pressure is adjusted depending on the difference.

4. Method according to claim 1 to 3, **characterized in that** the poles of the battery cells (3) are electrically connected to a battery test cycler (15) which applies a current to each battery cell (3) while the predetermined setpoint pressure is exerted onto the stack.

5. Method according to claim 1 to 4, **characterized in that** the battery cells (3) are preferably individually tempered while the predetermined setpoint pressure is exerted onto the stack.

6. Method according to claim 1 to 5, **characterized in that** the exertion of pressure is stopped in the case the input variable exceeds a predetermined threshold for the input variable.

7. Method according to claim 1 to 6, **characterized in that** the setpoint pressure is a setpoint pressure profile which varies in time.

8. Battery test device (1) for simulating real-life behavior of battery cells (3) in a battery pack, comprising
a housing (2),
a plurality of battery cells (3), the battery cells (3) being arrangeable in the housing (2) on top of each other to form a stack,
a pressing device (4) for exerting a predetermined setpoint pressure onto the stack,
a control device (5) for controlling or regulating the setpoint pressure which can be exerted on the stack via the pressing device (4),
at least one sensor (6, 7, 8) connected or connectable to the control device (5), wherein the at least one sensor (6, 7, 8) being arranged to detect a parameter of at least one of the plurality of battery cells (3) as an input variable,
the at least one sensor (6, 7, 8) being capable of detecting the current thickness, voltage, pressure or temperature of the at least one of the plurality of battery cells (3),
the control device (5) being set up in such a way that it controls or regulates the setpoint pressure exerted by the pressing device (4) depending on the at least one input variable.

9. Battery test device (1) according to claim 8, **characterized in that** the housing (2) comprises a receptacle (10) for accommodating the plurality of battery cells (3), the receptacle (10) comprises a base plate (11) and the at least one sensor (6, 7, 8) being a pressure sensor arranged on or in the receptacle (10).

10. Battery test device according to claim 8 or 9, **characterized in that** an intermediate plate (9) is arranged each between directly adjacent battery cells (3) of the stack.

11. Battery test device according to claim 10, **characterized in that** each intermediate plate (9) has or is assigned the at least one sensor (6, 7, 8), the at least one sensor (6, 7, 8) being a pressure or temperature sensor, wherein preferably a plurality of such sensors is provided.

12. Battery test device according to one of the claims 8 to 11, **characterized in that** the battery test device (1) comprises a thickness measuring sensor as the at least one sensor (6, 7, 8) in order to measure the thickness of each individual battery cell (3) on the stack, wherein preferably the thickness measuring sensor being preferably carried out as a distance measuring sensor to measure the distance between the respective intermediate plate (9) and the base plate (11) or between two intermediate plates of the stack of battery cells (3), wherein preferably the distance measuring sensor being designed as a mechanical, magnetic, magneto-inductive, eddy current, capacitive, optical or sound sensor.

13. Battery test device according to one of the claims 9 to 12, **characterized in that** the receptacle (10) is designed as a cassette or drawer and can be moved out of the housing (2) of the battery test device (1) or can be completely removed therefrom.

14. Battery test device according to one of claims 9 to 13, **characterized in that** the receptacle (10) comprises first electrical contacts (12) for contacting the poles of each individual battery cell (3), the housing (2) comprising second electrical contacts (13) which can be brought into connection with the first electrical contacts (12) of the receptacle (10) of the battery test device (1) or are in such a connection.

15. Battery test device according to any one of claims 8 to 14, **characterized in that** the control device (5) is set up such that it carries out a method according to steps c) and d) of claim 1 or any other claims 2 to 7 dependent on that.
